(19)

Europäisches
Patentamt
European
Patent Office
Office européen
des brevets

(11) **EP 4 583 076 A1**

(12) **EUROPEAN PATENT APPLICATION**
published in accordance with Art. 153(4) EPC

(43) Date of publication:
**09.07.2025 Bulletin 2025/28**

(21) Application number: **23860154.6**

(22) Date of filing: **23.08.2023**

(51) International Patent Classification (IPC):
**G08G 1/16** (2006.01)    **G09G 5/00** (2006.01)
**G09G 5/24** (2006.01)

(52) Cooperative Patent Classification (CPC):
**G08G 1/16; G09G 5/00; G09G 5/24**

(86) International application number:
**PCT/JP2023/030297**

(87) International publication number:
**WO 2024/048391 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022   JP 2022137574**

(71) Applicant: **Ichikoh Industries, Ltd.
Isehara-shi, Kanagawa 259-1192 (JP)**

(72) Inventors:
• **IKENOUE Sho
Isehara-shi, Kanagawa 259-1192 (JP)**
• **YAMAMOTO Hanae
Isehara-shi, Kanagawa 259-1192 (JP)**
• **WASHI Yuichiro
Isehara-shi, Kanagawa 259-1192 (JP)**

(74) Representative: **Lewis Silkin LLP
Arbor
255 Blackfriars Road
London SE1 9AX (GB)**

(54) **DISPLAY CONTROL DEVICE, INFORMATION DISPLAY SYSTEM, DISPLAY CONTROL METHOD, AND COMPUTER-READABLE NON-TEMPORARY RECORDING MEDIUM STORING PROGRAM**

(57)    To assist a driver of another vehicle attempting to pass in front of a host vehicle in recognizing the distance to the host vehicle and the time until the host vehicle approaches. A control ECU controlling a display operation of a display medium that is mounted in a vehicle and displays information toward a traveling direction of the vehicle recognizes, based on a recognition result of an external sensor mounted in the vehicle, a distance between the vehicle and another vehicle present in the traveling direction of the vehicle, causes the display medium to display distance information used for announcing the recognized distance between the vehicle and the other vehicle, and changes the distance information displayed on the display medium in accordance with a change in the recognized distance between the vehicle and the other vehicle.

FIG. 1

EP 4 583 076 A1

## Description

### TECHNICAL FIELD

The present invention relates to a display control device, an information display system, a display control method, and a computer-readable non-temporary recording medium storing a program.

### BACKGROUND ART

A known notification device notifies another vehicle attempting to pass in front of a host vehicle of information about a vehicle present in a blind spot of the other vehicle (see, for example, PTL 1). When recognizing another vehicle, the notification device described in PTL 1 determines whether there is a vehicle in the blind spot of the recognized other vehicle. If the notification device determines that a vehicle is present in the blind spot, the notification device causes a display provided on a front surface of the vehicle or the like to display information about the vehicle present in the blind spot.

### CITATION LIST

### PATENT LITERATURE

PTL 1: Japanese Unexamined Patent Application Publication No. 2020-107163

### SUMMARY OF THE INVENTION

### PROBLEMS TO BE SOLVED BY THE INVENTION

Below, a case is considered where a host vehicle is an autonomous vehicle that is unmanned and travels autonomously on a priority road, and another vehicle is a non-autonomous vehicle that is driven non-autonomously by a person and travels on a non-priority road. The host vehicle proceeds toward an intersection without traffic lights and the other vehicle attempts to enter the intersection. In this case, a driver of the other vehicle may misjudge the distance to the autonomous vehicle or the time until the autonomous vehicle approaches. In this case, the other vehicle may enter the intersection at a wrong timing and cause the autonomous vehicle to slow down or stop.

In consideration of the above-described circumstances, an object of the present invention is to provide a display control device, an information display system, a display control method, and a computer-readable non-temporary recording medium storing a program, which assist a driver of another vehicle attempting to pass in front of a host vehicle in recognizing the distance to the host vehicle and the time until the host vehicle approaches.

### MEANS FOR SOLVING THE PROBLEM

A display control device according to the present invention is a display control device controlling a display operation of a display medium that is mounted in a vehicle and displays information toward a traveling direction of the vehicle, the display control device recognizes, based on a recognition result of an external sensor mounted in the vehicle, a distance between the vehicle and another vehicle present in the traveling direction of the vehicle, causes the display medium to display distance information used for announcing the recognized distance between the vehicle and the other vehicle, and changes the distance information displayed on the display medium in accordance with a change in the recognized distance between the vehicle and the other vehicle.

An information display system according to the present invention is an information display system including a display medium that is mounted in a vehicle and displays information toward a traveling direction of the vehicle, and a display control device that controls a display operation of the display medium, in which the display control device recognizes, based on a recognition result of an external sensor mounted in the vehicle, a distance between the vehicle and another vehicle present in the traveling direction of the vehicle, causes the display medium to display distance information used for announcing the recognized distance between the vehicle and the other vehicle, and changes the distance information displayed on the display medium in accordance with a change in the recognized distance between the vehicle and the other vehicle.

A display control method according to the present invention is a display control method executed by a display control device controlling a display operation of a display medium that is mounted in a vehicle and displays information toward a traveling direction of the vehicle, the display control method includes a step of recognizing, based on a recognition result of an external sensor mounted in the vehicle, a distance between the vehicle and another vehicle present in a traveling direction of the vehicle, and a step of causing the display medium to display distance information used for announcing the recognized distance between the vehicle and the other vehicle, and changing the distance information displayed on the display medium in accordance with a change in the recognized distance between the vehicle and the other vehicle.

A computer-readable non-temporary recording medium storing a program according to the present invention stores a program that causes a display control device controlling a display operation of a display medium mounted in a vehicle and displaying information toward a traveling direction of the vehicle, to execute a procedure of recognizing, based on a recognition result of an external sensor mounted in the vehicle, a distance between the vehicle and another vehicle present in a traveling direction of the vehicle, and a procedure of causing the display medium to display distance information used for announcing the recognized distance between the vehicle and the other vehicle, and changing the distance information displayed on the display medium in accordance with a change in the recognized distance between the vehicle and the other vehicle.

EFFECT OF THE INVENTION

According to the present invention, it is possible to assist a driver of another vehicle passing in front of a host vehicle in recognizing the distance to the host vehicle and the time until the host vehicle approaches.

BRIEF DESCRIPTION OF THE DRAWINGS

[FIG. 1] FIG. 1 is a block diagram illustrating an outline of an information display system mounted in a vehicle according to one embodiment of the present invention.
[FIG. 2] FIG. 2 is a diagram illustrating an example of a state where another vehicle should be notified of the approach of the vehicle.
[FIG. 3] FIG. 3 is a diagram illustrating an example of a state where another vehicle should be notified of the approach of the vehicle.
[FIG. 4] FIG. 4 is a diagram illustrating an example of a state where another vehicle should be notified of the approach of the vehicle.
[FIG. 5] FIG. 5 is a table illustrating an example of distance information displayed by a display medium.
[FIG. 6] FIG. 6 is a table illustrating an example of information displayed on the display medium when a vehicle stops to give way to another vehicle.
[FIG. 7] FIG. 7 is a diagram illustrating an example of a method by which the display medium displays distance information.
[FIG. 8] FIG. 8 is a flowchart illustrating a process of a control ECU.

MODE FOR CARRYING OUT THE INVENTION

The present invention will be described below with reference to preferred embodiments. Note that the present invention is not limited to the embodiments described below, and can be appropriately modified without departing from the spirit of the present invention. In the embodiments described below, a part of the illustration and explanation of the configuration may be omitted. However, well-known or commonly known technologies may be appropriately applied as the omitted technologies within the scope that does not contradict the contents described below.

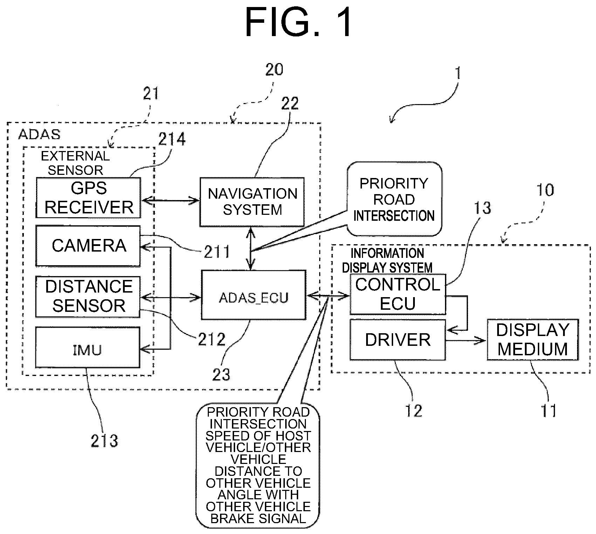

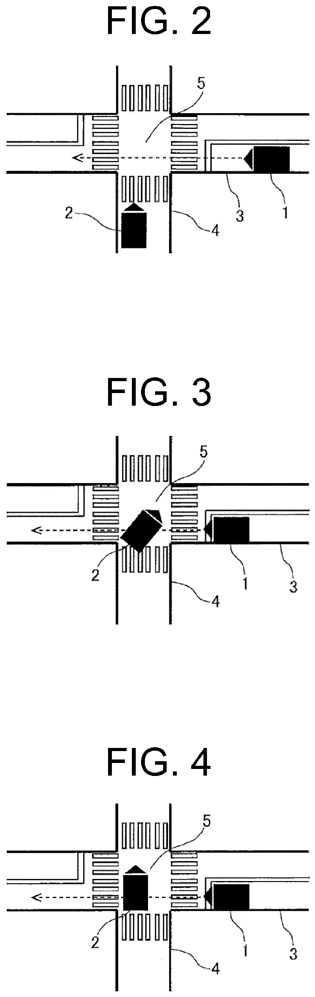

FIG. 1 is a block diagram illustrating an outline of a vehicle 1 in which an information display system 10 according to an embodiment of the present invention is mounted. The vehicle 1 illustrated in FIG. 1 is an autonomous vehicle that travels autonomously without a driver on a priority road 3 (see FIG. 2). The vehicle 1 is a bus having an autonomous driving level of level 4 or level 5.

The vehicle 1 includes the information display system 10 and an advanced driver-assistance system (hereinafter referred to as Advanced Driver-Assistance Systems (ADAS)) 20. The information display system 10 includes a display medium 11, a driver 12, and a control Electronic Control Unit (ECU) 13.

The display medium 11 is a display mounted in a front portion of the vehicle 1, and displays information toward a traveling direction of the vehicle 1. Examples of the display medium 11 include a Liquid Crystal Display (LCD), a Light Emitting Diode (LED) display, and an Organic Light Emitting Diode (OLED) display. The display medium 11 is arranged at a position visible to a driver of another vehicle 2 (see FIG. 2) attempting to cross in front of the vehicle 1, and displays information in a manner visible to the driver of the other vehicle 2 located about 50 m in front of the vehicle 1.

The driver 12 is a display driver who controls the display medium 11 and causes the display medium 11 to display information, based on display information transmitted from the control ECU 13. The information displayed on the display medium 11 includes distance information indicating a distance between the vehicle 1 and the other vehicle 2 in front of the vehicle 1. This distance information includes character information and image information. The character information is information by which it is possible to directly recognize the distance between the vehicle 1 and the other vehicle 2 in front of the vehicle 1 by characters such as 30 m, 20 m, and the like. The image information includes information such as a pictogram and a signal lamp by which it is possible to intuitively recognize the distance between the vehicle 1 and the other vehicle 2 in front of the vehicle 1 by an image. Each piece of distance information is provided in a plurality of patterns in accordance with the distance between the vehicle 1 and the other vehicle 2 in front of the vehicle 1. The distance information will be described in detail later.

The control ECU 13 stores a program used for controlling a display operation of the display medium 11, and the control ECU 13 is operated by the program. The program is stored in a computer-readable non-temporary recording medium. That is, the control ECU 13 includes a computer-readable non-temporary recording medium that stores a program. Based on various types of information transmitted from the ADAS 20, the control ECU 13 determines whether there is another vehicle 2 that should be notified of information indicating that the vehicle 1 approaches. If the other vehicle 2 is present in front of the vehicle 1, the control ECU 13 calculates the distance between the vehicle 1 and the other vehicle 2. The various types of information transmitted from the ADAS 20 include information used for identifying the priority road 3 and a non-priority road 4 (see FIG. 2), information used for identifying an intersection 5 (see FIG. 2), information about the vehicle speed of the vehicle 1 and the other vehicle 2, information about the distance between the vehicle 1 and the other vehicle 2, information about the relative angle between the vehicle 1 and the other vehicle 2, and information regarding a brake operation of the vehicle 1. The control ECU 13 generates display information in accordance with the calculated distance between the vehicle 1 and the other vehicle 2 and transmits the display information to the driver 12.

The ADAS 20 includes an external sensor 21, a navigation system 22, and an ADAS_ECU 23. The external sensor 21 includes a camera 211 that acquires image data, a distance sensor 212 that acquires distance data, an Inertial Measurement Unit (IMU) 213 that acquires behavior data of the vehicle 1 such as speed, acceleration, and orientation, and a Global Positioning System (GPS) receiver 214 that acquires position data.

The camera 211 is a sensing camera that uses image recognition technology to sense a target object such as a vehicle, a road sign, and a pedestrian in the vicinity of the vehicle 1 from an acquired image. The camera 211 is mounted in a front portion, a side portion, a rear portion, or the like of the vehicle 1, and senses a target object such as a vehicle, a road sign, and a pedestrian located in front of, on the side of, or behind the vehicle 1, and transmits sensing information to the ADAS_ECU 23.

The distance sensor 212 is a laser radar (Light Imaging Detection and Ranging (LiDAR)), a millimeter wave radar, or the like. The distance sensor 212 detects the distance to the target object in front of the vehicle 1 and transmits the sensing information to the ADAS_ECU 23. The laser radar measures the distance to a target object and analyzes a property of the target object. Examples of analyzing a property of the target object include recognizing road shapes based on curbstones and the like, and recognizing white lines by utilizing reflectance. A millimeter wave radar directly measures the distance to a target object.

The IMU 213 includes a 3-axis acceleration sensor, a 3-axis gyro sensor, and the like, and senses the speed, the acceleration, the orientation, and the like of the vehicle 1 and transmits sensing information to the ADAS_ECU 23. The GPS receiver 214 receives a GPS signal and calculates position information of the vehicle 1. The GPS receiver 214 transmits the calculated position information to the navigation system 22.

The navigation system 22 calculates a traveling position of the vehicle 1, based on the position information of the vehicle 1 transmitted from the GPS receiver 214 and map information stored in a memory (not illustrated), and transmits a calculation result to the ADAS_ECU 23. At this time, the navigation system 22 determines whether the traveling position of the vehicle 1 is on the priority road 3, whether the vehicle 1 is traveling toward the intersection 5 such as a T-junction, a crossroads, and the like, and transmits a determination result to the ADAS_ECU 23.

The ADAS_ECU 23 executes autonomous drive control of the vehicle 1, based on various types of detection information transmitted from the external sensor 21 and various types of navigation information transmitted from the navigation system 22. Further, the ADAS_ECU 23 transmits, to the control ECU 13, various types of detection information transmitted from the external sensor 21 and various types of navigation information transmitted from the navigation system 22.

Based on the various types of detection information of the external sensor 21 transmitted from the ADAS_ECU 23 and the various types of navigation information transmitted from the navigation system 22, the control ECU 13 determines whether there is another vehicle 2 that should be notified of information indicating that the vehicle 1 approaches. Specifically, the control ECU 13 determines whether a Time to Collision (TTC) expressed by Equation (1) below satisfies a condition expressed by Relationship (2) below.

$$TTC = L/V \ldots (1)$$

Here, L is the distance between the vehicle 1 and the other vehicle 2, and V is the relative speed (absolute value) between the vehicle 1 and the other vehicle 2.

$$TTC + \alpha \leq T' \ldots (2)$$

Here, $\alpha$ is the time required for a driver of the other vehicle 2 to grasp a dangerous situation and react (hereinafter referred to as reaction time). T' is the time obtained by adding a predetermined extra time $\beta$ to T0 (T0 + $\beta$), T0 being the time required for the other vehicle 2 to pass the intersection 5 (hereinafter referred to as passing time), and T' is a value calculated based on a previously determined predetermined value or various types of detection information from the external sensor 21 and navigation information. Note that $\alpha$ is preferably 0.75 sec or more, and examples of $\alpha$ include 0.75 sec, 1.0 sec, and 1.5 sec.

FIGs. 2 to 4 are diagrams illustrating examples of a state where the other vehicle 2 should be notified of the approach of the vehicle 1. FIGs. 2 to 4 illustrate the priority road 3, the non-priority road 4, and the intersection 5 between the priority road 3 and the non-priority road 4. As illustrated in FIG. 2, in a state where the vehicle 1 is traveling on the priority road 3 toward the intersection 5 and the other vehicle 2 is attempting to enter the intersection 5 from the non-priority road 4, the control ECU 13 (see FIG. 1) determines that there is another vehicle 2 that should be notified of the approach of the vehicle 1. The other vehicle 2 may pass through the intersection 5 by turning right, as illustrated in FIG. 3, or the other vehicle 2 may pass through the intersection 5 by traveling straight, as illustrated in FIG. 4.

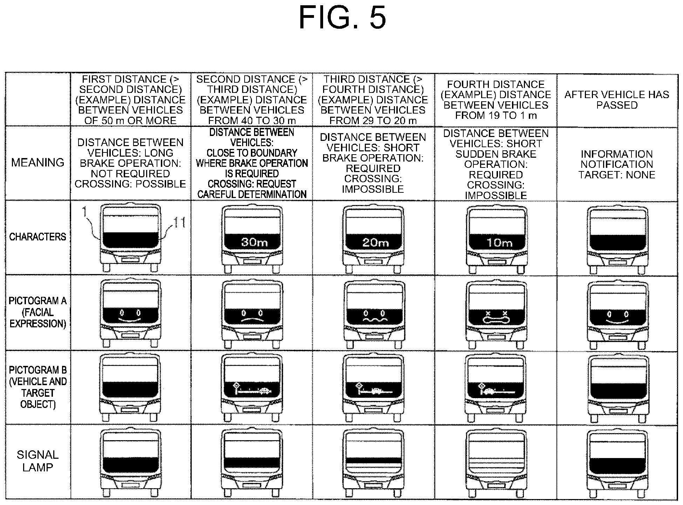

FIG. 5 is a table illustrating examples of distance information displayed by the display medium 11. As illustrated in the table, a display aspect of the distance information displayed by the display medium 11 changes in accordance with the distance between the vehicle 1 and the other vehicle 2 (hereinafter referred to as inter-vehicle distance).

For example, in a case where the inter-vehicle distance is sufficiently long that the vehicle 1 does not need to brake even if the other vehicle 2 crosses in front of the vehicle 1, such as when the inter-vehicle distance is 50 m or more, the display medium 11 does not display any content or displays information that reassures the driver of the other vehicle 2. For example, in the example of a first distance in the first column from the left in FIG. 5, among the pieces of image information, a pictogram A (facial expression) is a pictorial symbol of a smiling face that reassures the driver of the other vehicle 2. In the example of the first distance in the first column from the left in FIG. 5, character information and, among the pieces of image information, a pictogram B (a vehicle and a target object) and a signal lamp are not displayed.

In a case where the inter-vehicle distance is close to a boundary determining whether the vehicle 1 needs to brake if the other vehicle 2 crosses in front of the vehicle 1, such as when the inter-vehicle distance is 40 to 30 m, the display medium 11 displays information requesting the driver of the other vehicle 2 to make a careful decision. For example, in the example of a second distance in the second column from the left in FIG. 5, the character information is an actual measurement value of the inter-vehicle distance, and the pictogram A among the pieces of image information is a pictorial symbol having a serious expression that alerts the driver of the other vehicle 2. Further, the pictogram B among the pieces of image information is a pictorial symbol expressing that the distance between the vehicle 1 and the target object is a distance at which caution is required, and the signal lamp among the pieces of image information is in a state where one of three levels (a lowermost level) is illuminated.

For example, in a case where the inter-vehicle distance is a distance at which the vehicle 1 needs to brake if the other vehicle 2 crosses in front of the vehicle 1, such as when the inter-vehicle distance is 29 to 20 m, the display medium 11 displays information urging the driver of the other vehicle 2 not to cross. For example, in the example of a third distance in the third column from the left in FIG. 5, the character information is the actual measurement value of the inter-vehicle distance, and the pictogram A among the pieces of image information is a pictorial symbol having a confused expression that urges the driver of the other vehicle 2 not to cross. Further, the pictogram B among the pieces of image information is a pictorial symbol expressing that the distance between the vehicle 1 and the target object is such a short distance that a collision will occur unless a brake operation is performed, and among the pieces of image information, the signal lamp is in a state where two of the three levels (the lowermost level and the middle level) are illuminated.

For example, in a case where the inter-vehicle distance is a distance at which the vehicle 1 needs to brake suddenly if the other vehicle 2 crosses in front of the vehicle 1, such as when the inter-vehicle distance is 19 to 1 m, the display medium 11 displays information warning the driver of the other vehicle 2 not to cross. For example, in the example of a fourth distance in the fourth column from the left in FIG. 5, the character information is the actual measurement value of the inter-vehicle distance, and the pictogram A among the pieces of image information is a pictorial symbol having a panicked expression that warns the driver of the other vehicle 2 not to cross. Further, the pictogram B among the pieces of image information is a pictorial symbol expressing that the distance between the target object and the vehicle 1 is such a short distance that a collision will occur unless a sudden brake operation is performed, and among the pieces of image information, the signal lamp is in a state where three levels of the three levels are illuminated.

For example, after the vehicle 1 or the other vehicle 2 passes through the intersection 5, the display medium 11 does not displayed any content or displays information that reassures the driver of the other vehicle 2. For example, in an example after the passage of the vehicle 1 or the other vehicle 2 in the fifth column from the left in FIG. 5, among the pieces of image information, the pictogram A is a pictorial symbol of a smiling face that reassures the driver of the other vehicle 2. In the example after the passage of the vehicle 1 or the other vehicle 2 in the fifth column from the left in FIG. 5, the character information and, among the pieces of image information, the pictogram B and the signal lamp are not displayed.

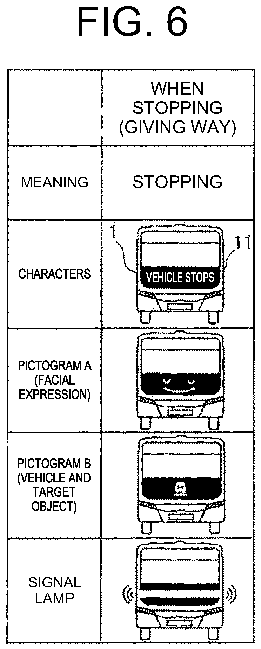

FIG. 6 is a table illustrating an example of information displayed by the display medium 11 when the vehicle 1 stops to give way to the other vehicle 2. As illustrated in the table, the character information on the display medium 11 is a message such as "Vehicle Stops" to announce that the vehicle stops, and the pictogram A among the pieces of image information is a pictorial symbol having an expression conveying affection. Further, the pictogram B among the pieces of image information is a pictorial symbol expressing a stopping vehicle, and the signal lamp among the pieces of image information is in a slowly blinking state.

The display medium 11 may display any one of the character information, the pictogram A, the pictogram B, and the signal lamp when the vehicle 1 is traveling or stops, or may display two or more of these pieces of information. In the latter case, for example, the display medium 11 may alternately display the pictogram A, the pictogram B, or the signal lamp and the character information, or may sequentially display three or more among the character information, the pictogram A, the pictogram B, and the signal lamp.

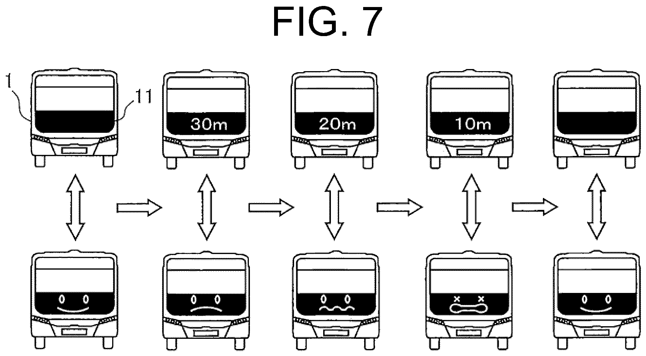

FIG. 7 is a diagram illustrating an example of a method by which the display medium 11 displays distance information. As illustrated in FIG. 7, the display medium 11 alternately displays the character information and the image information (for example, the pictogram A, as illustrated in FIG. 7) when the inter-vehicle distance changes from a long distance to a short distance. Thus, by the image information, the driver of the other vehicle 2 can intuitively understand the meaning of the numbers that are directly recognizable from the character information.

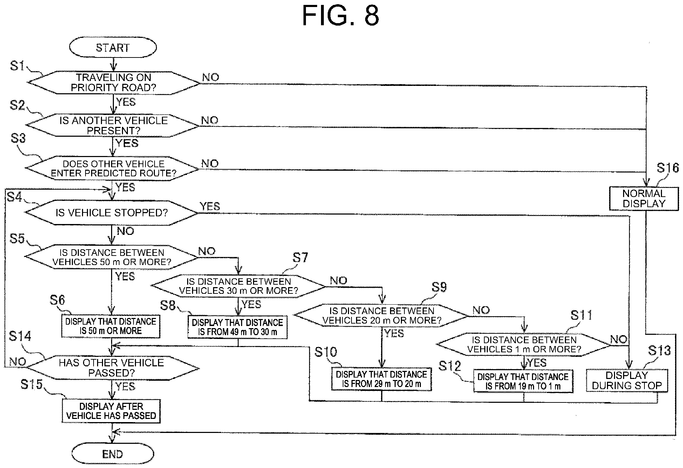

FIG. 8 is a flowchart illustrating a process of the control ECU 13. First, in step S1, the control ECU 13 determines whether the vehicle 1 is traveling on the priority road 3. If an affirmative determination is obtained in step S1, the processing proceeds to step S2, and if a negative determination is obtained in step S1, the processing proceeds to step S16. In step S16, the control ECU 13 causes the display medium 11 to continue to display a normal display. Note that the normal display is displayed on the display medium 11 before the start of step S1.

In step S2, the control ECU 13 determines whether another vehicle 2 is present in the traveling direction of the vehicle 1. If an affirmative determination is obtained in step S2, the processing proceeds to step S3, and if a negative determination is obtained in step S2, the processing proceeds to step S16. In step S16, the control ECU 13 causes the display medium 11 to continue to display the normal display.

In step S3, the control ECU 13 determines, based on the TTC, whether there is a possibility that the other vehicle 2 enters a predicted route of the vehicle 1 from the non-priority road 4. If an affirmative determination is obtained in step S3, the processing proceeds to step S4, and if a negative determination is obtained in step S3, the processing proceeds to step S16. In step S16, the control ECU 13 causes the display medium 11 to continue to display the normal display.

In step S4, the control ECU 13 determines whether the vehicle 1 is stopped. If an affirmative determination is obtained in step S4, the processing proceeds to step S13, and if a negative determination is obtained in step S4, the processing proceeds to step S5. In steps S1 to S4, the control ECU 13 causes the display medium 11 to continue to display the normal display.

In step S5, the control ECU 13 determines whether the distance between the vehicle 1 and the other vehicle 2 in front of the vehicle 1 (inter-vehicle distance) is 50 m or more, based on various types of detection information of the external sensor 21 transmitted from the ADAS_ECU 23. If an affirmative determination is obtained in step S5, the processing proceeds to step S6, and if a negative determination is obtained in step S5, the processing proceeds to step S7.

In step S6, the control ECU 13 causes the display medium 11 to display content used when the inter-vehicle distance is 50 m or more. On the other hand, in step S7, the control ECU 13 determines whether the inter-vehicle distance is 30 m or more, based on various types of detection information of the external sensor 21 transmitted from the ADAS_ECU 23. If an affirmative determination is obtained in step S7, the processing proceeds to step S8, and if a negative determination is obtained in step S7, the processing proceeds to step S9.

In step S8, the control ECU 13 causes the display medium 11 to display content used when the inter-vehicle distance is 49 to 30 m. On the other hand, in step S9, the control ECU 13 determines whether the inter-vehicle distance is 20 m or more, based on the various types of detection information of the external sensor 21 transmitted from the ADAS_ECU 23. If an affirmative determination is obtained in step S9, the processing proceeds to step S10, and if a negative determination is obtained in step S9, the processing proceeds to step S11.

In step S10, the control ECU 13 causes the display medium 11 to display content used when the inter-vehicle distance is 29 to 20 m. On the other hand, in step S11, the control ECU 13 determines whether the inter-vehicle distance is 1 m or more, based on the various types of detection information of the external sensor 21 transmitted from the ADAS_ECU 23. If an affirmative determination is obtained in step S11, the processing proceeds to step S12, and if a negative determination is obtained in step S11, the processing proceeds to step S13.

In step S12, the control ECU 13 causes the display medium 11 to display content used when the inter-vehicle distance is 19 to 1 m. On the other hand, in step S13, the control ECU 13 causes the display medium 11 to display content used during a stop.

The processing proceeds from steps S6, S8, S10, S12, and S13 to step S14. In step S14, the control ECU 13 determines whether the other vehicle 2 in front of the vehicle 1 has passed, based on the various types of detection information of the external sensor 21 transmitted from the ADAS_ECU 23. If an affirmative determination is obtained in step S14, the processing proceeds to step S15, and if a negative determination is obtained in step S14, the processing proceeds to step S4.

In step S15, the control ECU 13 causes the display medium 11 to display content used after the other vehicle 2 has passed. Thus, the process is completed.

As described above, in the present embodiment, the control ECU 13 recognizes the distance (inter-vehicle distance) between the vehicle 1 and the other vehicle 2 present in the traveling direction of the vehicle 1, based on a recognition result of the external sensor 21 mounted in the vehicle 1, and causes the display medium 11 to display distance information used for announcing the recognized inter-vehicle distance. Thus, it is possible to assist the driver of the other vehicle 2 in recognizing the distance to the vehicle 1 and the time until the vehicle 1 approaches, when the other vehicle 2 attempts to cross the priority road 3 on which the vehicle 1, which is an autonomous vehicle, is traveling. In particular, the control ECU 13 changes the distance information displayed on the display medium 11 in accordance with a change in the recognized inter-vehicle distance. Thus, the driver of the other vehicle 2 can recognize that the inter-vehicle distance is gradually decreasing, and can be urged to make a careful decision as to whether to cross. Therefore, it is possible to prevent the driver of the other vehicle 2 from misjudging the distance to the vehicle 1 and the time until the approach of the vehicle 1, which is an autonomous vehicle, and it is possible to prevent the other vehicle 2 from entering the path of the vehicle 1 at the wrong timing, causing the vehicle 1 to slow down or stop.

In the present embodiment, after the control ECU 13 causes the display medium 11 to display the distance information, the control ECU 13 determines, based on the recognition result of the external sensor 21, whether the other vehicle 2 starts crossing the path of the vehicle 1, and whether the inter-vehicle distance is a distance at which the vehicle 1 needs to brake. When the other vehicle 2 starts crossing the path of the vehicle 1 and the inter-vehicle distance is a distance at which the vehicle 1 needs to brake, the control ECU 13 causes the display medium 11 to display stop information used for announcing that the vehicle 1 stops. Thus, it is possible to notify the driver of the other vehicle 2 of information indicating that the vehicle 1, which is an autonomous vehicle, stops when the other vehicle 2 attempts to cross the priority road 3 on which the vehicle 1, which is an autonomous vehicle, is traveling.

In the present embodiment, the control ECU 13 recognizes the time to collision TTC between the vehicle 1 and the other vehicle 2, based on the recognition result of the external sensor 21, and determines whether the inter-vehicle distance is a distance at which the vehicle 1 needs to brake, based on a time obtained by adding a reaction time $\alpha$ of the driver to the recognized time to collision TTC. Thus, it is possible to notify the driver of the other vehicle 2 early enough of information indicating that the inter-vehicle distance is a distance at which the vehicle 1 needs to brake.

In the present embodiment, the control ECU 13 causes the display medium 11 to alternately display character information and image information. Thus, by the image information, the driver of the other vehicle 2 can intuitively understand the meaning of the numbers that are directly recognizable from the character information. Therefore, it is possible to assist the driver of the other vehicle 2 in deciding whether to start crossing the intersection.

The present invention has been described above based on the above-mentioned embodiments. However, the present invention is not limited to the above-mentioned embodiments, and modifications may be made without departing from the spirit of the present invention, and techniques from the embodiments and well-known or commonly-known techniques may be used in combination.

For example, in the above-described embodiment, the control ECU 13 that controls a display operation of the display medium 11 and the ADAS_ECU 23 that uses the ADAS 20 to execute autonomous drive control of the vehicle 1 are provided. However, the ADAS_ECU 23 may also control the display operation of the display medium 11. Further, in the above-described embodiment, the vehicle 1 is a level 4 or level 5 autonomous vehicle, and the other vehicle 2 is a non-autonomous vehicle. However, the vehicle 1 and the other vehicle 2 may be autonomous vehicles of level 3 or lower, or the vehicle 1 may be a non-autonomous vehicle.

In the above-described embodiment, the display medium 11 is provided functionally and structurally independent of the headlight and the signal lamp. However, the display medium 11 may be structurally integrally formed with the headlight and the signal lamp to not impede the functions of these lights. In the above-described embodiment, the external sensor 21 is provided structurally independent of the display medium 11. However, the external sensor 21 may be structurally integrally formed with the display medium 11.

Further, in the above-described embodiment, a program used for operating the control ECU 13 is stored in the memory of the control ECU 13 and is not updated. However, the program may be updated via a system in the vehicle 1, such as the ADAS 20.

DESCRIPTION OF REFERENCE NUMERALS

1: Vehicle
2: Other vehicle
3: Priority road
4: Non-priority road
5: Intersection
10: Information display system
11: Display medium
13: Control ECU (display control device)
21: External sensor
L: Distance
TTC: Time to Collision
$\alpha$: Reaction time

**Claims**

1. A display control device (13) controlling a display operation of a display medium (11) that is mounted in a vehicle (1) and displays information toward a traveling direction of the vehicle (1), the display control device (13)

recognizing, based on a recognition result of an external sensor (21) mounted in the vehicle (1), a distance (L) between the vehicle (1) and another vehicle (2) present in the traveling direction of the vehicle (1);
causing the display medium (11) to display distance information used for announcing the recognized distance (L) between the vehicle (1) and the other vehicle (2); and

changing the distance information displayed on the display medium (11) in accordance with a change in the recognized distance (L) between the vehicle (1) and the other vehicle (2).

2. The display control device (13) according to claim 1, which after causing the display medium (11) to display the distance information, determines, based on the recognition result of the external sensor (21), whether the other vehicle (2) starts crossing a path of the vehicle (1), and whether the distance (L) between the vehicle (1) and the other vehicle (2) is a distance at which the vehicle (1) needs to brake; and

when the other vehicle (2) starts crossing the path of the vehicle (1) and the distance (L) between the vehicle (1) and the other vehicle (2) is a distance at which the vehicle (1) needs to brake, causes the display medium (11) to display stop information used for announcing that the vehicle (1) stops.

3. The display control device (13) according to claim 2, which recognizes a time to collision (TTC) between the vehicle (1) and the other vehicle (2), based on the recognition result of the external sensor (21); and determines whether the distance (L) between the vehicle (1) and the other vehicle (2) is a distance at which the vehicle (1) needs to brake, based on a time obtained by adding a reaction time of a driver of the other vehicle (2) to the recognized time to collision (TTC).

4. The display control device (13) according to claim 1, wherein

the distance information includes first distance information including character information or image information, and second distance information including character information or image information, a display aspect of the second distance information being different from a display aspect of the first distance information, and the first distance information and the second distance information are alternately displayed.

5. The display control device (13) according to claim 1, which causes the display medium (11) to display the distance information in a state where the vehicle (1) is traveling autonomously on a priority road (3) toward an intersection (5) between the priority road (3) and a non-priority road (4), and before the other vehicle (2) is traveling non-autonomously from the non-priority road (4) into the intersection (5).

6. An information display system (10), comprising:

a display medium (11) that is mounted in a vehicle (1) and displays information toward a traveling direction of the vehicle (1); and a display control device (13) that controls a display operation of the display medium (11), wherein

the display control device (13)

recognizes, based on a recognition result of an external sensor (21) mounted in the vehicle (1), a distance (L) between the vehicle (1) and another vehicle (2) present in a traveling direction of the vehicle (1),

causes the display medium (11) to display distance information used for announcing the recognized distance (L) between the vehicle (1) and the other vehicle (2), and

changes the distance information displayed on the display medium (11) in accordance with a change in the recognized distance (L) between the vehicle (1) and the other vehicle (2).

7. A display control method executed by a display control device (13) controlling a display operation of a display medium (11) that is mounted in a vehicle (1) and displays information toward a traveling direction of the vehicle (1), the display control method comprising:

a step of recognizing, based on a recognition result of an external sensor (21) mounted in the vehicle (1), a distance (L) between the vehicle (1) and another vehicle (2) present in a traveling direction of the vehicle (1); and a step of causing the display medium (11) to display distance information used for announcing the recognized distance (L) between the vehicle (1) and the other vehicle (2), and changing the distance information displayed on the display medium (11) in accordance with a change in the recognized distance (L) between the vehicle (1) and the other vehicle (2).

8. A computer-readable non-temporary recording medium storing a program that causes a display control device (13) controlling a display operation of a display medium (11) mounted in a vehicle (1) and displaying information toward a traveling direction of the vehicle (1), to execute

a procedure of recognizing, based on a recognition result of an external sensor (21) mounted in the vehicle (1), a distance (L) between the vehicle (1) and another vehicle (2) present in a traveling direction of the vehicle (1); and a procedure of causing the display medium (11) to display distance information used for announcing the recognized distance (L) between the vehicle (1) and the other vehicle (2), and changing the distance information displayed on the display medium (11) in accordance with a change in the recognized distance (L) between the vehicle (1) and the other vehicle (2).

# FIG. 1

20

21

22

1

ADAS

EXTERNAL
SENSOR

214

GPS
RECEIVER

NAVIGATION
SYSTEM

PRIORITY
ROAD
INTERSECTION

10

13

CAMERA

211

INFORMATION
DISPLAY SYSTEM

CONTROL
ECU

DISTANCE
SENSOR

ADAS_ECU

212

IMU

DRIVER

DISPLAY
MEDIUM

213

23

12

11

PRIORITY ROAD
INTERSECTION
SPEED OF HOST
VEHICLE/OTHER
VEHICLE
DISTANCE TO
OTHER VEHICLE
ANGLE WITH
OTHER VEHICLE
BRAKE SIGNAL

# FIG. 2

# FIG. 3

# FIG. 4

# FIG. 5

| | FIRST DISTANCE (> SECOND DISTANCE) (EXAMPLE) DISTANCE BETWEEN VEHICLES OF 50 m OR MORE | SECOND DISTANCE (> THIRD DISTANCE) (EXAMPLE) DISTANCE BETWEEN VEHICLES FROM 40 TO 30 m | THIRD DISTANCE (> FOURTH DISTANCE) (EXAMPLE) DISTANCE BETWEEN VEHICLES FROM 29 TO 20 m | FOURTH DISTANCE (EXAMPLE) DISTANCE BETWEEN VEHICLES FROM 19 TO 1 m | AFTER VEHICLE HAS PASSED |
|---|---|---|---|---|---|
| MEANING | DISTANCE BETWEEN VEHICLES: LONG BRAKE OPERATION: NOT REQUIRED CROSSING: POSSIBLE | DISTANCE BETWEEN VEHICLES: CLOSE TO BOUNDARY WHERE BRAKE OPERATION IS REQUIRED CROSSING: REQUEST CAREFUL DETERMINATION | DISTANCE BETWEEN VEHICLES: SHORT BRAKE OPERATION: REQUIRED CROSSING: IMPOSSIBLE | DISTANCE BETWEEN VEHICLES: SHORT SUDDEN BRAKE OPERATION: REQUIRED CROSSING: IMPOSSIBLE | INFORMATION NOTIFICATION TARGET: NONE |
| CHARACTERS | | 30m | 20m | 10m | |
| PICTOGRAM A (FACIAL EXPRESSION) | | | | | |
| PICTOGRAM B (VEHICLE AND TARGET OBJECT) | | | | | |
| SIGNAL LAMP | | | | | |

# FIG. 6

| | WHEN STOPPING (GIVING WAY) |
|---|---|
| MEANING | STOPPING |
| CHARACTERS | |
| PICTOGRAM A (FACIAL EXPRESSION) | |
| PICTOGRAM B (VEHICLE AND TARGET OBJECT) | |
| SIGNAL LAMP | |

# FIG. 7

# FIG. 8

## INTERNATIONAL SEARCH REPORT

| International application No. |
|---|
| **PCT/JP2023/030297** |

**A.     CLASSIFICATION OF SUBJECT MATTER**

*G08G 1/16*(2006.01)i; *G09G 5/00*(2006.01)i; *G09G 5/24*(2006.01)i
FI:     G08G1/16 C; G09G5/00 510A; G09G5/00 550C; G09G5/00 550B; G09G5/00 530M; G09G5/00 530T; G09G5/24 610Z

According to International Patent Classification (IPC) or to both national classification and IPC

**B.     FIELDS SEARCHED**

Minimum documentation searched (classification system followed by classification symbols)

G08G1/16; G09G5/00; G09G5/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| Y | JP 2013-89095 A (TOYOTA MOTOR CORP.) 13 May 2013 (2013-05-13) paragraphs [0014]-[0040] | 1, 6-8 |
| A | | 2-5 |
| Y | JP 2021-60676 A (YUPITERU CORP.) 15 April 2021 (2021-04-15) paragraphs [0113]-[0420] | 1, 6-8 |
| A | paragraphs [0113]-[0420] | 2-5 |
| A | JP 2006-209325 A (DENSO CORP.) 10 August 2006 (2006-08-10) paragraphs [0011]-[0029] | 1-8 |
| A | JP 2019-109737 A (MITSUBISHI MOTORS CORP.) 04 July 2019 (2019-07-04) paragraphs [0008]-[0032] | 1-8 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2023/030297**

| Patent document cited in search report | | | Publication date (day/month/year) | Patent family member(s) | Publication date (day/month/year) |
|---|---|---|---|---|---|
| JP | 2013-89095 | A | 13 May 2013 | (Family: none) | |
| JP | 2021-60676 | A | 15 April 2021 | (Family: none) | |
| JP | 2006-209325 | A | 10 August 2006 | (Family: none) | |
| JP | 2019-109737 | A | 04 July 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020107163 A